# FASCICULE DE BREVET EUROPEEN

(11) **EP 3 516 999 B1**
(45) Date de publication et mention de la délivrance du brevet: **29.07.2020**
(21) Numéro de dépôt: 19152894.2
(22) Date de dépôt: 21.01.2019
(51) Int. Cl.: A47J 31/44, A47J 31/46

(54) **MACHINE DE PRÉPARATION DE BOISSONS MUNIE D'UNE SEULE POMPE**
GETRÄNKEZUBEREITUNGSMASCHINE MIT NUR EINER WASSERPUMPE
BEVERAGE PREPARATION MACHINE PROVIDED WITH ONLY ONE PUMP

(30) Priorité: 25.01.2018 FR 1850612
(43) Date de publication de la demande: 31.07.2019
(73) Titulaire: SEB S.A., 69130 Ecully (FR)
(72) Inventeur: MORIN, Gilles, 69290 POLLIONNAY (FR)
(74) Mandataire: Bourrières, Patrice

(56) Documents cités:
- EP-A1- 1 147 730
- EP-A1- 1 719 439
- EP-A1- 1 886 605
- EP-A1- 2 476 352
- WO-A1-2006/056705
- WO-A1-2013/008177
- WO-A2-2009/130661
- US-A1- 2005 259 508

## Description

La présente invention se rapporte au domaine technique général des machines de préparation de boisson, notamment des machines à café automatiques pour réaliser des préparations à base de lait et/ou de café.

Il est connu du document EP2268174 une machine de préparation de boissons comportant des première et deuxième chaudières instantanées, une buse de distribution de café alimentée par un circuit de distribution du café et un dispositif rotatif d'agitation comprenant un outil rotatif entrainé par un moteur électrique autour d'un axe vertical et un conduit d'acheminement de vapeur issue de la deuxième chaudière vers l'outil rotatif, le dispositif rotatif d'agitation étant destiné à coopérer avec une préparation contenue dans un récipient.

Dans cette machine de préparation de boisson, la première chaudière comporte un premier élément chauffant et un premier tube à eau alimenté en eau par une première pompe électrique pour produire de l'eau chaude destinée à la production du café et la deuxième chaudière comporte un deuxième élément chauffant et un deuxième tube à eau alimenté en eau par une deuxième pompe électrique pour produire de la vapeur destinée à alimenter le dispositif rotatif d'agitation.

Ainsi, cette machine de préparation de boissons met en œuvre deux pompes électriques qui représentent un cout important dans le coût global de la machine. De plus, la machine de préparation de boissons doit comporter un circuit de contrôle apte à piloter les deux pompes.

On connait également des documents WO2006056705 ou EP1147730 une machine de préparation de boissons.

Le but de la présente invention est de remédier aux inconvénients précités et de proposer une machine de préparation de boissons qui présente une conception simple et économique à mettre en œuvre.

Un autre but de la présente invention est de proposer une machine de préparation de boissons qui présente une mise en œuvre simple et ergonomique, notamment pour réaliser une préparation à base de lait et de café.

Ces buts sont atteints avec une machine de préparation de boissons comportant au moins une chaudière instantanée, un circuit de production et de distribution du café alimenté en eau chaude par l'au moins une chaudière et un dispositif rotatif d'agitation comprenant un outil rotatif entrainé par un moteur électrique autour d'un axe A et destiné à coopérer avec une préparation contenue dans un récipient, ledit dispositif rotatif d'agitation comportant un conduit d'acheminement d'eau chaude et/ou de vapeur issue de l'au moins une chaudière vers l'outil rotatif, ladite machine comportant une seule pompe électrique pilotée par un circuit de contrôle qui alimente l'au moins une chaudière en eau pour produire soit de l'eau chaude, soit de la vapeur.

Ainsi, la machine de préparation de boissons ne comporte qu'une pompe électrique pour alimenter l'au moins une chaudière en eau froide pour produire de l'eau chaude ou de la vapeur, l'au moins une chaudière alimentant en eau chaude le circuit de production et de distribution du café ou alimentant en eau chaude et/ou en vapeur le conduit d'acheminement du dispositif rotatif d'agitation. Une telle machine de préparation de boissons présente une conception simple et économique à mettre en œuvre.

Par chaudière instantanée, on comprend une chaudière qui comporte un élément chauffant qui amène et maintient un tube à eau à une température prédéterminée.

Une fois la préchauffe du tube à eau réalisée, la chaudière transforme instantanément l'eau froide qui parcourt le tube à eau en eau chaude ou en vapeur.

De manière avantageuse, la pompe électrique est du type à piston oscillant.

Une telle pompe est un composant du commerce, particulièrement compact et économique.

De préférence, le circuit de contrôle pilote la pompe pour alimenter l'au moins une chaudière avec un débit en eau D1 pour produire de l'eau chaude et le circuit de contrôle commande la pompe pour alimenter l'au moins une chaudière avec un débit en eau D2 pour produire de la vapeur, D1 étant supérieur à D2.

Ainsi, lorsque l'au moins une chaudière est alimentée en eau froide avec un débit faible D2, elle transforme toute l'eau en vapeur et lorsque l'au moins une chaudière est alimentée en eau froide avec un débit important D1, elle transforme l'eau froide en eau chaude.

De manière avantageuse, le débit D1 est compris entre 100 et 300 cm3/mn, de préférence 200 cm3/mn et le débit D2 est compris entre 40 et 60 cm3/mn, de préférence 50 cm3/mn.

De préférence, le circuit de contrôle pilote la pompe pour alimenter l'au moins une chaudière avec un débit en eau D2 pour produire de la vapeur, le débit D2 étant compris entre 20 et 60 cm3/mn, de préférence 30 cm3/mn.

Un tel débit d'eau va permettre de produire une quantité de vapeur adaptée à faire chauffer/mousser le lait disposé dans le récipient avec un dispositif rotatif d'agitation pour obtenir rapidement une température et une quantité de mousse suffisante en évitant des projections hors du récipient.

Avantageusement, la machine de préparation de boissons comporte au moins une électrovanne pilotée par le circuit de contrôle pour alimenter le circuit de production et de distribution du café en eau chaude ou en vapeur.

Une électrovanne est un dispositif économique pour réaliser l'aiguillage de l'eau chaude et de la vapeur vers les circuit/conduit correspondants.

De préférence, la machine de production de boisson ne comporte qu'une chaudière instantanée comprenant un seul élément chauffant pour produire de l'eau chaude et de la vapeur.

Ainsi, la machine ne comporte qu'une seule chaudière, ce qui permet de simplifier la construction et d'optimiser le coût de la machine.

De manière avantageuse, la chaudière instantanée ne comprend qu'un seul tube à eau alimenté en eau par la pompe pour produire de l'eau chaude ou de la vapeur.

Ainsi, la construction de la chaudière est particulièrement simple et économique.

De préférence, la machine de distribution de boissons comporte des première et deuxième chaudières instantanées, la première chaudière comportant un premier tube à eau alimenté en eau par la pompe et un premier élément chauffant pour produire de l'eau chaude et la deuxième chaudière comportant un deuxième tube à eau alimenté en eau par la pompe et un deuxième élément chauffant pour produire de la vapeur.

Une telle disposition permet d'enchainer immédiatement la production d'eau chaude et la production de vapeur et réciproquement, chaque chaudière étant régulée à une température adéquate pour produire soit de l'eau chaude, soit de la vapeur.

De préférence, le circuit de production et de distribution du café comporte un dispositif d'infusion destiné à recevoir de la mouture de café.

Avantageusement, le dispositif rotatif d'agitation comprend un arbre d'entrainement de l'outil rotatif et le conduit d'acheminement d'eau chaude et/ou de vapeur comporte une partie tubulaire qui s'étend le long de l'axe A entre une première extrémité sur laquelle est agencé l'outil rotatif et une seconde extrémité agencée sur l'arbre d'entrainement.

Ainsi, la partie tubulaire assure deux fonctions, acheminer l'eau chaude et/ou la vapeur vers l'outil rotatif et entrainer l'outil rotatif.

De préférence, la partie tubulaire est agencée de manière amovible sur l'arbre d'entrainement.

Par agencée de manière amovible, on comprend que la partie tubulaire est démontable de l'arbre d'entrainement sans outil.

Une telle disposition permet de nettoyer facilement l'outil rotatif après une préparation de boisson.

De manière avantageuse, la machine de distribution de boissons comporte une tête de distribution qui comprend au moins une buse de distribution de café et le dispositif rotatif d'agitation, ladite tête de distribution étant mobile entre une position haute d'attente dans laquelle la buse de distribution de café et l'outil rotatif sont situés au-dessus du récipient et une position basse de travail dans laquelle l'outil rotatif est situé dans le récipient et la buse de distribution café est agencée à proximité d'une ouverture supérieure du récipient.

Ainsi, l'utilisateur ne déplace pas le récipient pour réaliser la préparation à base de lait et de café. Il manipule uniquement la tête de distribution pour positionner l'outil rotatif dans le récipient et la buse de distribution café à proximité de l'ouverture supérieure du récipient.

L'invention sera mieux comprise à l'étude du mode de réalisation pris à titre nullement limitatif et illustré dans les figures annexées dans lesquelles :
- La figure 1 illustre une vue en perspective d'une machine de préparation de boissons selon un mode particulier de réalisation de l'invention.
- La figure 2 illustre une vue en perspective de la tête de distribution de la machine de préparation de boissons illustrée sur la figure 1.
- La figure 3 illustre une vue en coupe selon la ligne III-III de la tête de distribution de la machine de préparation de boissons illustrée sur la figure 2.
- La figure 4 illustre une vue schématique de la machine de préparation de boissons illustrée sur la figure 1 selon un premier mode de réalisation.
- La figure 5 illustre une vue schématique de la machine de préparation de boissons illustrée sur la figure 1 selon un deuxième mode de réalisation.

On notera que, dans ce document, les termes «horizontal», «vertical», «inférieur», «supérieur», «longitudinal», «transversal», «haut», «bas», employés pour décrire la machine de distribution de boissons font référence à cette machine reposant sur un plan de travail, en situation d'usage.

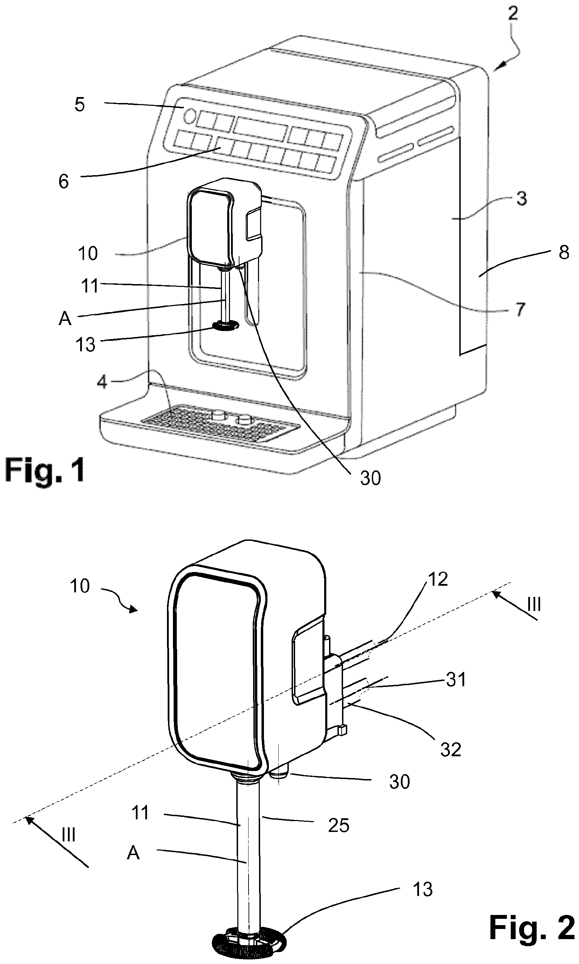

Dans l'exemple de réalisation représenté aux figures 1 à 3, une machine de distribution de boissons 2 comporte notamment un bâti 3, un support de récipient 4 sur lequel un récipient peut être disposé, et une tête de distribution 10 réglable en hauteur. Le support de récipient 4 peut par exemple comporter une grille de support et un bac récolte gouttes. La tête de distribution est montée coulissante sur une plaque support 7 attenante au bâti 3.

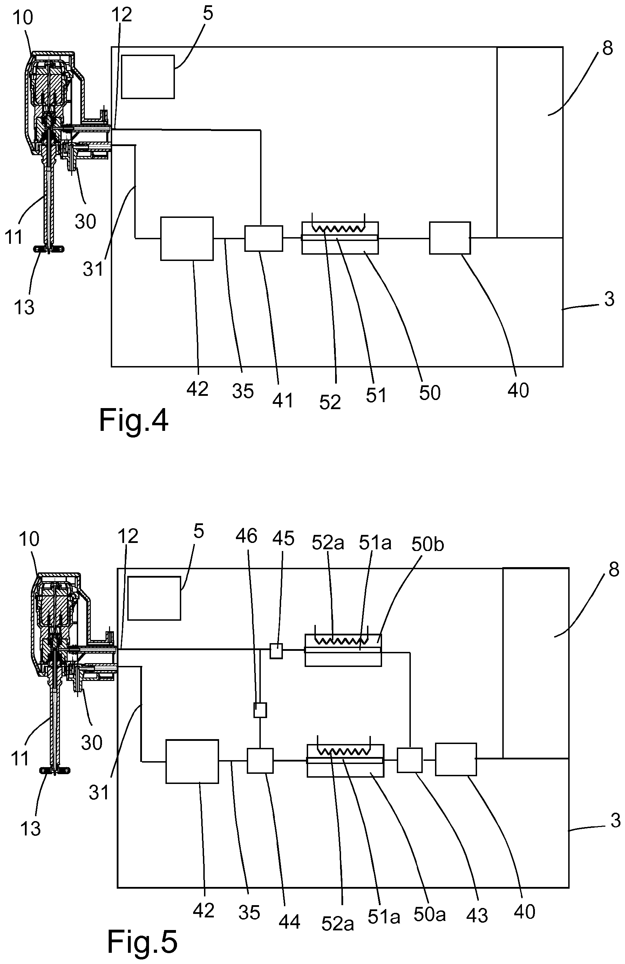

La tête de distribution 10 comporte une buse 30 de distribution de café et un dispositif rotatif d'agitation 11 comprenant un outil rotatif 13 autour d'un axe A et destiné à coopérer avec une préparation contenue dans le récipient. Le dispositif rotatif d'agitation 11 comporte un conduit 12 d'acheminement d'eau chaude et/ou de vapeur vers l'outil rotatif 13. La buse 30 de distribution de café fait partie d'un circuit de distribution 31 du café produit dans un dispositif d'infusion 42 (Fig.4). La machine de préparation de boissons 2 comporte un réservoir 8 formant une alimentation en eau froide, un distributeur de café en poudre provenant d'un broyeur à café intégré au distributeur et le dispositif d'infusion alimenté en eau chaude par une chaudière 50 (Fig.4). Le circuit de distribution 31 du café comporte un conduit souple 32 (Fig.2) pour permettre la mobilité de la tête de distribution 10.

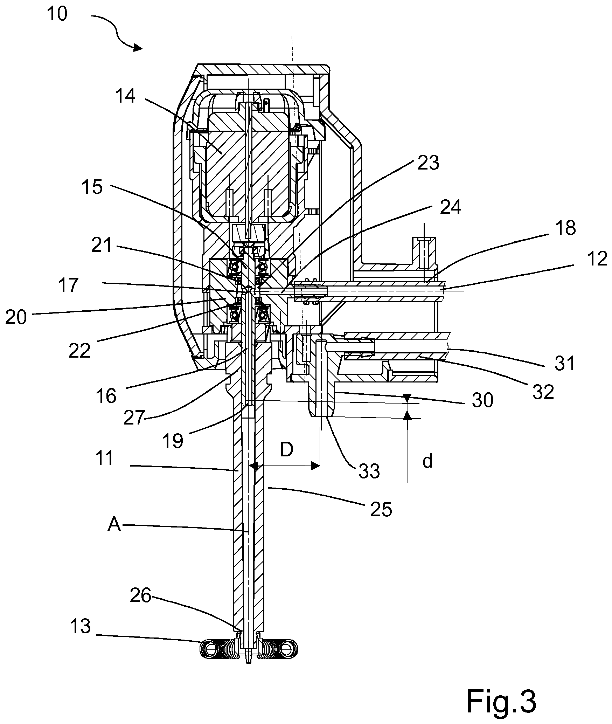

Tel que visible sur la figure 3, le dispositif rotatif d'agitation 11 comporte un moteur 14 électrique, un arbre d'entrainement 15, une boite à vapeur 20 et l'outil rotatif 13. L'outil rotatif 13 est agencé à une première extrémité 26 d'une partie tubulaire 25. La partie tubulaire 25 s'étend le long de l'axe A et comporte une deuxième extrémité 27 agencée sur l'arbre d'entrainement 15.

La boîte à vapeur 20 est traversée par l'arbre d'entrainement 15 et comporte deux paliers 21, 22 étanches de guidage de l'arbre d'entrainement 15. La boite à vapeur 20 comporte entre les deux paliers 21, 22 une chambre 23 alimentée en eau chaude et/ou en vapeur par un canal radial 24. L'arbre d'entrainement 15 présente une partie creuse 16 sur laquelle est agencée la deuxième extrémité 27 de la partie tubulaire 25. La partie creuse 16 comporte des ouvertures traversantes 17 qui permettent de faire communiquer l'intérieur de la partie creuse 16 avec la chambre 23. Ainsi le conduit 12 d'acheminement d'eau chaude et/ou de vapeur du dispositif rotatif d'agitation 11 comporte le canal radial 24, la chambre 23, les ouvertures traversantes 17, la partie creuse 16 et la partie tubulaire 25. Le conduit 12 d'acheminement d'eau chaude et/ou de vapeur comporte également un conduit souple 18 pour permettre la mobilité de la tête de distribution 10 par rapport au support de récipient 4.

La partie tubulaire 25 et l'outil rotatif 13 forment un ensemble qui est amovible de la tête de distribution 10. La partie tubulaire 25 est montée coulissante sur la partie creuse 16 de l'arbre d'entrainement 15 avec un léger serrage pour assurer l'entrainement en rotation. D'autres types d'assemblages démontables, notamment par baïonnettes sont possibles.

Lorsque la partie tubulaire 25 et l'outil rotatif 13 sont retirés, la tête de distribution 10 est déplaçable selon une direction verticale, parallèle à l'axe A, par rapport au support de récipient 4 entre une position basse dans laquelle un récipient de petite taille, comme une tasse destinée à contenir un ristretto, peut être disposé sur le support de récipient 4 et être alimenté en boisson, par exemple en café, à partir de la buse 30 de distribution de café sans risque d'éclaboussure, et une position haute dans laquelle un récipient de grande taille, comme un mug, peut être disposé sur le support de récipient 4 et être alimenté en boisson, par exemple en eau, à partir de la partie creuse 16 sans risque d'éclaboussure.

De manière avantageuse, la distance d entre un orifice de sortie 19 de la partie creuse 16 et un orifice de sortie 33 de la buse 30 de distribution de café mesurée selon une direction verticale est inférieure à 10 millimètres.

Lorsque la partie tubulaire 25 et l'outil rotatif 13 sont agencés sur l'arbre d'entrainement 15, la tête de distribution 10 est déplaçable selon une direction verticale, parallèle à l'axe A, par rapport au support de récipient 4 entre une position haute d'attente dans laquelle la buse 30 de distribution de café et l'outil rotatif 13 sont situés au-dessus du récipient et une position basse de travail dans laquelle l'outil rotatif 13 est situé dans le récipient et la buse 30 de distribution de café est agencée à proximité d'une ouverture supérieure du récipient.

La machine de préparation de boissons 2 comporte un circuit contrôle 5 (Fig.1) pour la commande et la gestion des cycles de préparation des boissons. Le circuit de contrôle 5 comporte plusieurs organes de commande 6 conçus pour, chacun, lancer une préparation à base de lait et de café à partir d'un seul appui, par exemple un cappuccino ou un café latte.

Tel que représentée schématiquement dans un premier mode de réalisation, la machine de distribution de boissons 2 comporte une seule pompe 40 électrique et une seule chaudière 50 instantanée. La machine de distribution de boissons 2 comporte la tête de distribution 10 agencée sur le bâti 3 et la pompe 40 dont une entrée est reliée au réservoir 8 qui est destiné à recevoir de l'eau froide. La pompe 40 électrique peut être du type à piston oscillant. La pompe 40 comporte une sortie reliée au tube à eau 51 de la chaudière 50. La chaudière 50 comporte un élément chauffant 52 agencé le long du tube à eau 51. La machine de distribution de boissons 2 comporte une électrovanne 41 qui permet d'orienter l'eau chaude ou la vapeur produite par la chaudière 50 : l'eau chaude vers un circuit de production 35 du café, notamment vers le dispositif d'infusion 42 ou vers le conduit 12 d'acheminement du dispositif rotatif d'agitation 11, et la vapeur vers le conduit 12 d'acheminement du dispositif rotatif d'agitation 11.

Le circuit de contrôle 5 pilote la pompe 40 pour alimenter la chaudière 50 avec un débit en eau D1 pour produire de l'eau chaude et le circuit de contrôle 5 commande la pompe 40 pour alimenter la chaudière 50 avec un débit en eau D2 pour produire de la vapeur. Par exemple, le débit D1 est compris entre 100 et 300 cm3/mn, de préférence 200 cm3/mn et le débit D2 est compris entre 40 et 60cm3/mn, de préférence 50 cm3/mn.

En fonctionnement, par exemple, lorsque l'utilisateur veut réaliser une préparation à base de lait et de café, notamment un cappuccino, il verse du lait dans un récipient et le positionne sur le repose récipient 4, sous la tête de distribution 10 qui est en position haute d'attente. L'utilisateur déplace ensuite la tête de distribution 10 dans la position basse de travail pour amener l'outil rotatif 13 dans le lait et la buse 30 de distribution café au-dessus d'une ouverture supérieure du récipient. L'utilisateur appuie alors sur l'organe de commande 6 pour lancer le cycle de préparation du cappuccino. Le circuit de contrôle 5 commande le démarrage du moteur 14 pour faire tourner l'outil rotatif 13 et commande l'alimentation électrique de l'élément chauffant 52 de la chaudière 50. Une fois que le tube à eau 51 a atteint une température prédéterminée, le circuit de contrôle 5 commande la pompe 40 pour alimenter en eau le tube à eau 51 avec un débit D2. Le tube à eau 51 chauffé par l'élément chauffant 52 va vaporiser l'eau pour produire de la vapeur. Le circuit de contrôle 5 commande l'électrovanne 41 pour diriger la vapeur vers le conduit 12 d'acheminement pour arriver dans le lait. Ainsi, le lait va être chauffé et moussé. Après un temps prédéterminé, le circuit de contrôle 5 stoppe le moteur 14 et l'arrivée de vapeur puis commande la réalisation d'un café. Le circuit de contrôle 5 commande l'alimentation électrique de l'élément chauffant 52 de la chaudière 50 et commande la pompe 40 pour alimenter en eau le tube à eau 51 avec un débit D1. Le tube à eau 51 chauffé par l'élément chauffant 52 va amener l'eau à une température comprise entre 95 et 100°C. Le circuit de contrôle 5 commande l'électrovanne 41 pour diriger l'eau chaude vers le dispositif d'infusion 42 préalablement alimenté en mouture de café. L'eau chaude qui traverse le dispositif d'infusion 42 se transforme en café qui va s'écouler dans le récipient par la buse 30 de distribution de café. Une fois la préparation terminée, l'utilisateur remonte la tête de distribution 10 et peut désaccoupler l'outil rotatif 13 et la partie tubulaire 25 pour les nettoyer, par exemple en les plaçant dans un lave-vaisselle.

Tel que représentée schématiquement dans un deuxième mode de réalisation, la machine de distribution de boissons 2 comporte une seule pompe 40 électrique et deux chaudières 50a, 50b instantanées. La pompe 40 comprend une entrée reliée au réservoir 8 qui est destiné à recevoir de l'eau froide. La pompe 40 comporte une sortie reliée à une électrovanne 43 qui permet d'orienter l'eau vers un tube à eau 51a de la chaudière 50a instantanée ou vers un tube à eau 51b de la chaudière 50b instantanée. La chaudière 50a comporte un élément chauffant 52a agencé le long du tube à eau 51a pour produire de l'eau chaude et la chaudière 50b comporte un élément chauffant 52b agencé le long du tube à eau 51b pour produire de la vapeur. La machine de distribution de boissons 2 comporte une électrovanne 44 qui permet d'orienter l'eau chaude produite par la chaudière 50a vers un circuit de production 35 du café, notamment vers le dispositif d'infusion 42 ou vers le conduit 12 d'acheminement du dispositif rotatif d'agitation 11. La vapeur produite par la chaudière 50b est dirigée vers le conduit 12 d'acheminement du dispositif rotatif d'agitation 11. La machine de distribution de boissons 2 comporte deux clapets antiretours 45, 46.

Le circuit de contrôle 5 pilote la pompe 40 pour alimenter la chaudière 50a avec un débit en eau D1 pour produire de l'eau chaude et le circuit de contrôle 5 commande la pompe 40 pour alimenter la chaudière 50b avec un débit en eau D2 pour produire de la vapeur. Par exemple, le débit D1 est compris entre 150 et 250 cm3/mn, de préférence 200 cm3/mn et le débit D2 est compris entre 40 to 60cm3/mn, de préférence 50 cm3/mn. Dans un mode de réalisation dans lequel la machine de préparation de boissons peut fonctionner avec une gamme plus large de taille de récipients, notamment des récipients de petites tailles, le débit D2 est compris entre 20 et 60 cm3/mn, de préférence 30 cm3/mn.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Dans une variante de réalisation non illustrée, la machine de préparation de boissons ne comporte qu'une chaudière instantanée comprenant un seul élément chauffant. La chaudière comporte un premier tube à eau alimenté en eau par la pompe pour produire de l'eau chaude et un deuxième tube à eau alimenté en eau par la pompe pour produire de la vapeur.

## Revendications

1. Machine de préparation de boissons (2) comportant au moins une chaudière (50, 50a, 50b) instantanée, un circuit de production (35) et de distribution (31) du café alimenté en eau chaude par l'au moins une chaudière (50, 50a, 50b) et un dispositif rotatif d'agitation (11) comprenant un outil rotatif (13) entrainé par un moteur électrique (14) autour d'un axe A et destiné à coopérer avec une préparation contenue dans un récipient, ledit dispositif rotatif d'agitation (11) comportant un conduit (12) d'acheminement d'eau chaude et/ou de vapeur issues de l'au moins une chaudière (50, 50a, 50b) vers l'outil rotatif (13), ladite machine comportant une seule pompe (40) électrique pilotée par un circuit de contrôle (5) qui alimente l'au moins une chaudière (50, 50a, 50b) en eau pour produire soit de l'eau chaude, soit de la vapeur.

2. Machine de préparation de boissons (2) selon la revendication 1, **caractérisée en ce que** la pompe (40) électrique est du type à piston oscillant.

3. Machine de préparation de boissons (2) selon l'une quelconque des revendications précédentes, **caractérisée en ce que** le circuit de contrôle (5) pilote la pompe (40) pour alimenter l'au moins une chaudière (50, 50a) avec un débit en eau D1 pour produire de l'eau chaude et le circuit de contrôle (5) pilote la pompe (40) pour alimenter l'au moins une chaudière (50, 50b) avec un débit en eau D2 pour produire de la vapeur, D1 étant supérieur à D2.

4. Machine de préparation de boissons (2) selon la revendication 3, **caractérisée en ce que** le débit D1 est compris entre 100 et 300 cm3/mn, de préférence 200 cm3/mn et le débit D2 est compris entre 40 et 60 cm3/mn, de préférence 50 cm3/mn.

5. Machine de préparation de boissons (2) selon la revendication 3, **caractérisée en ce que** le circuit de contrôle (5) pilote la pompe (40) pour alimenter l'au moins une chaudière (50, 50a) avec un débit en eau D2 pour produire de la vapeur, le débit D2 étant compris entre 20 et 60 cm3/mn, de préférence 30 cm3/mn.

6. Machine de préparation de boissons (2) selon l'une quelconque des revendications précédentes, **caractérisée en ce qu'**elle comporte au moins une électrovanne (41, 43, 44) pilotée par le circuit de contrôle (5) pour alimenter le circuit de production (35) et de distribution (31) du café en eau chaude ou le conduit (12) d'acheminement du dispositif rotatif d'agitation (11) en eau chaude ou en vapeur.

7. Machine de préparation de boissons (2) selon l'une quelconque des revendications précédentes, **caractérisée en ce qu'**elle ne comporte qu'une chaudière (50) instantanée comprenant un seul élément chauffant (52) pour produire de l'eau chaude et de la vapeur

8. Machine de préparation de boissons (2) selon la revendication 7, **caractérisée en ce que** la chaudière instantanée (50) ne comprend qu'un seul tube à eau (51) alimenté en eau par la pompe (40) pour produire de l'eau chaude ou de la vapeur.

9. Machine de préparation de boissons (2) selon l'une quelconque des revendications 1 à 6, **caractérisée en ce qu'**elle comporte des première (50a) et deuxième (50b) chaudières instantanées, la première chaudière (50a) comportant un premier tube à eau (51a) alimenté en eau par la pompe et un premier élément chauffant (52a) pour produire de l'eau chaude et la deuxième chaudière (50b) comportant un deuxième tube à eau (51b) alimenté en eau par la pompe (40) et un deuxième élément chauffant (52b) pour produire de la vapeur.

10. Machine de préparation de boissons (2) selon l'une quelconque des revendications précédentes, **caractérisée en ce que** le circuit de production (35) et de distribution (31) du café comporte un dispositif d'infusion (42) destinée à recevoir de la mouture de café.

11. Machine de préparation de boissons (2) selon l'une quelconque des revendications précédentes, **caractérisée en ce que** le dispositif rotatif d'agitation (11) comprend un arbre d'entrainement (15) de l'outil rotatif (13) et **en ce que** le conduit (12) d'acheminement d'eau chaude et/ou de vapeur comporte une partie tubulaire (25) qui s'étend le long de l'axe A entre une première extrémité (26) sur laquelle est agencé l'outil rotatif (13) et une seconde extrémité (27) agencée sur l'arbre d'entrainement (15).

12. Machine de préparation de boissons (2) selon l'une quelconque des revendications précédentes, **caractérisée en ce que** qu'elle comporte une tête de distribution (10) qui comprend au moins une buse (30) de distribution de café et le dispositif rotatif d'agitation (11), ladite tête de distribution (10) étant mobile entre une position haute d'attente dans laquelle la buse (30) de distribution de café et l'outil rotatif (13) sont situés au-dessus du récipient et une position basse de travail dans laquelle l'outil rotatif (13) est situé dans le récipient et la buse (30) de distribution café est agencée à proximité d'une ouverture supérieure du récipient.

## Patentansprüche

1. Getränkezubereitungsmaschine (2), die mindestens einen Durchlauferhitzer (50, 50a, 50b), einen Produktions- (35) und Verteilungskreislauf (31) des Kaffees, der mit Warmwasser von mindestens einem Erhitzer (50, 50a, 50b) versorgt wird, und eine drehende Rührvorrichtung (11), umfasst, die ein Drehwerkzeug (13) umfasst, das von einem Elektromotor (14) um eine Achse A angetrieben wird und dazu bestimmt ist, mit einer Zubereitung zusammenzuwirken, die in einem Behälter enthalten ist, wobei die drehende Rührvorrichtung (11) eine Warmwasser- und/oder Dampf-Beförderungsleitung (12)umfasst, die aus dem mindestens einen Erhitzer (50, 50a, 50b) zu dem Drehwerkzeug (13) ausgeht, wobei die Maschine eine einzige Elektropumpe (40) umfasst, die von einer Steuerschaltung (5) gesteuert wird, die mindestens einen Erhitzer (50, 50a, 50b) mit Wasser zum Erzeugen entweder des Warmwassers oder des Dampfs versorgt.

2. Getränkezubereitungsmaschine (2) nach Anspruch 1, **dadurch gekennzeichnet, dass** die Elektropumpe (40) vom Typ mit Schwingkolben ist.

3. Getränkezubereitungsmaschine (2) nach einem der vorstehenden Ansprüche, **dadurch gekennzeichnet, dass** die Steuerschaltung (5) die Pumpe (40) steuert, um mindestens einen Erhitzer (50, 50a) mit einem Wasserdurchsatz D1 zu versorgen, um Warmwasser zu erzeugen, und die Steuerschaltung (5) die Pumpe (40) steuert, um mindestens einen Erhitzer (50, 50b) mit einem Wasserdurchsatz D2 zu versorgen, um Dampf zu erzeugen, wobei D1 größer ist als D2.

4. Getränkezubereitungsmaschine (2) nach Anspruch 3, **dadurch gekennzeichnet, dass** der Durchsatz D1 zwischen 100 und 300 cm³/Min., vorzugsweise 200 cm³/Min. liegt, und der Durchsatz D2 zwischen 40 und 60 cm³/Min., vorzugsweise 50 cm³/Min. liegt.

5. Getränkezubereitungsmaschine (2) nach Anspruch 3, **dadurch gekennzeichnet, dass** die Steuerschaltung (5) die Pumpe (40) steuert, um mindestens einen Erhitzer (50, 50a) mit einem Wasserdurchsatz T2 zu versorgen, um Dampf zu erzeugen, wobei der Durchsatz D2 zwischen 20 und 60 cm³/Min., vorzugsweise 30 cm³/Min. liegt.

6. Getränkezubereitungsmaschine (2) nach einem der vorstehenden Ansprüche, **dadurch gekennzeichnet, dass** sie mindestens ein Magnetventil (41, 43, 44) umfasst, das von der Steuerschaltung (5) gesteuert wird, um den Produktions- (35) und Verteilungskreislauf (31) des Kaffees mit Warmwasser oder die Beförderungsleitung (12) der drehenden Rührvorrichtung (11) mit Warmwasser oder Dampf zu versorgen.

7. Getränkezubereitungsmaschine (2) nach einem der vorstehenden Ansprüche, **dadurch gekennzeichnet, dass** sie nur einen Durchlauferhitzer (50) umfasst, der ein einziges Heizelement (52) umfasst, um Warmwasser und Dampf zu erzeugen.

8. Getränkezubereitungsmaschine (2) nach Anspruch 7, **dadurch gekennzeichnet, dass** der Durchlauferhitzer (50) nur ein Wasserohr (51) umfasst, das mit Wasser von der Pumpe (40) versorgt wird, um Warmwasser oder Dampf zu erzeugen.

9. Getränkezubereitungsmaschine (2) nach einem der Ansprüche 1 bis 6, **dadurch gekennzeichnet, dass** sie einen ersten (50a) und einen zweiten (50b) Durchlauferhitzer umfasst, wobei der erste Erhitzer (50a) ein erstes Wasserrohr (51a), das mit Wasser von der Pumpe versorgt wird, und ein zweites Heizelement (52a) zum Erzeugen von Warmwasser umfasst, und der zweite Erhitzer (50b) ein zweites Wasserrohr (51b), das von der Pumpe (40) mit Wasser versorgt wird, und ein zweites Heizelement (52b), um Dampf zu erzeugen, umfasst.

10. Getränkezubereitungsmaschine (2) nach einem der vorstehenden Ansprüche, **dadurch gekennzeichnet, dass** der Produktions- (35) und Verteilungskreislauf (31) des Kaffees eine Infusionsvorrichtung (42) umfasst, die dazu bestimmt ist, Kaffeemahlgut aufzunehmen.

11. Getränkezubereitungsmaschine (2) nach einem der vorstehenden Ansprüche, **dadurch gekennzeichnet, dass** die drehende Rührvorrichtung (11) eine Antriebswelle (15) des Drehwerkzeugs (13) umfasst, und dass die Beförderungsleitung (12) von Warmwasser und/oder Dampf einen rohrförmigen Teil (25) umfasst, der sich entlang der Achse A zwischen einem ersten Ende (26), auf dem das Drehwerkzeug (13) eingerichtet ist, und einem zweiten Ende (27), das auf der Antriebswelle (15) eingerichtet ist, erstreckt.

12. Getränkezubereitungsmaschine (2) nach einem der vorstehenden Ansprüche, **dadurch gekennzeichnet, dass** sie einen Abgabekopf (10) umfasst, der mindestens eine Kaffeeabgabedüse (30) und die drehende Rührvorrichtung (11) umfasst, wobei der Abgabekopf (10) zwischen einer Wartehochstellung, in der die Kaffeeabgabedüse (30) und das Drehwerkzeug (13) oberhalb des Behälters liegen, und einer Arbeitstiefstellung, in der das Drehwerkzeug (13) in dem Behälter liegt und die Kaffeeabgabedüse (30) in der Nähe einer oberen Öffnung des Behälters eingerichtet ist, beweglich ist.

## Claims

1. Beverage preparation machine (2) including at least one instantaneous boiler (50, 50a, 50b), a circuit for producing (35) and distributing (31) coffee supplied with hot water by the at least one boiler (50, 50a, 50b) and a rotating stirring device (11) comprising a rotating tool (13) driven by an electric motor (14) about an axis A and intended to cooperate with a preparation contained in a recipient, said rotating stirring device (11) including a duct (12) for conveying hot water and/or steam coming from the at least one boiler (50, 50a, 50b) to the rotating tool (13), said machine including a single electric pump (40) controlled by a control circuit (5) that supplies the at least one boiler (50, 50a, 50b) with water in order to produce either hot water, or steam.

2. Beverage preparation machine (2) according to claim 1, **characterised in that** the electric pump (40) is of the oscillating piston type.

3. Beverage preparation machine (2) according to any one of the preceding claims, **characterised in that** the control circuit (5) controls the pump (40) in order to supply the at least one boiler (50, 50a) with a water flow rate D1 in order to produce hot water and the control circuit (5) controls the pump (40) in order to supply the at least one boiler (50, 50b) with a water flow rate D2 in order to produce steam, D1 being greater than D2.

4. Beverage preparation machine (2) according to claim 3, **characterised in that** the flow rate D1 is comprised between 100 and 300 cm3/mn, preferably 200 cm3/mn and the flow rate D2 is comprised between 40 and 60 cm3/mn, preferably 50 cm3/mn.

5. Beverage preparation machine (2) according to claim 3, **characterised in that** the control circuit (5) controls the pump (40) in order to supply the at least one boiler (50, 50a) with a water flow rate D2 in order to produce steam, the flow rate D2 being comprised between 20 and 60 cm3/mn, preferably 30 cm3/mn.

6. Beverage preparation machine (2) according to any one of the preceding claims, **characterised in that** it includes at least one solenoid valve (41, 43, 44) controlled by the control circuit (5) in order to supply the circuit for producing (35) and distributing (31) coffee with hot water or the duct (12) for conveying of the rotating stirring device (11) with hot water or with steam.

7. Beverage preparation machine (2) according to any one of the preceding claims, **characterised in that** it includes only an instantaneous boiler (50) comprising a single heating element (52) for producing hot water and steam.

8. Beverage preparation machine (2) according to claim 7, **characterised in that** the instantaneous boiler (50) comprises only a single water tube (51) supplied with water by the pump (40) in order to produce hot water or steam.

9. Beverage preparation machine (2) according to any one of claims 1 to 6, **characterised in that** it comprises first (50a) and second (50b) instantaneous boilers, the first boiler (50a) including a first water tube (51a) supplied with water by the pump and a first heating element (52a) for producing hot water and the second boiler (50b) including a second water tube (51b) supplied with water by the pump (40) and a second heating element (52b) for producing steam.

10. Beverage preparation machine (2) according to any one of the preceding claims, **characterised in that** the circuit for producing (35) and distributing (31) coffee includes an infusion device (42) intended to receive the coffee grinds.

11. Beverage preparation machine (2) according to any one of the preceding claims, **characterised in that** the rotating stirring device (11) comprises a drive shaft (15) of the rotating tool (13) and **in that** the duct (12) for conveying hot water and/or steam includes a tubular portion (25) that extends along the axis A between a first end (26) whereon the rotating tool (13) is arranged and a second end (27) arranged on the drive shaft (15).

12. Beverage preparation machine (2) according to any one of the preceding claims, **characterised in that** it includes a distribution head (10) that comprises at least one nozzle (30) for distributing coffee and the rotating stirring device (11), said distribution head (10) being mobile between a high holding position in which the nozzle (30) for distributing coffee and the rotating tool (13) are located above the recipient and a low working position in which the rotating tool (13) is located in the recipient and the nozzle (30) for distributing coffee is arranged in the vicinity of an upper opening of the recipient.
